# EUROPÄISCHE PATENTSCHRIFT

(11) **EP 4 100 809 B1**
(45) Veröffentlichungstag und Bekanntmachung des Hinweises auf die Patenterteilung: **06.12.2023**
(21) Anmeldenummer: 21701992.6
(22) Anmeldetag: 25.01.2021
(51) Int. Cl.: G05D 1/02, G01C 21/00

(54) **VERFAHREN UND VORRICHTUNG ZUR POSITIONSBESTIMMUNG EINES FAHRZEUGS**
METHOD AND DEVICE FOR DETERMINING THE POSITION OF A VEHICLE
PROCÉDÉ ET DISPOSITIF DESTINÉ À DÉTERMINER LA POSITION D'UN VÉHICULE

(30) Priorität: 04.02.2020 DE 102020201351
(43) Veröffentlichungstag der Anmeldung: 14.12.2022
(73) Patentinhaber: VOLKSWAGEN AKTIENGESELLSCHAFT, 38440 Wolfsburg (DE)
(72) Erfinder: IKEN, Timo, 38440 Wolfsburg (DE); KUBE, Roland, 38179 Schwülper (DE)
(86) Internationale Anmeldenummer: PCT/EP2021/051647
(87) Internationale Veröffentlichungsnummer: WO 2021/156091

(56) Entgegenhaltungen:
- EP-A1- 3 578 919
- WO-A1-2017/178232
- DE-A1-102015 112 313

## Beschreibung

Die vorliegende Erfindung betrifft ein Verfahren zur Positionsbestimmung eines Fahrzeugs und eine Vorrichtung zur Durchführung eines Verfahrens.

Mittlerweile ist eine Positionsbestimmung für Navigationsanwendungen in Kraftfahrzeugen mittels satellitengestützter Navigationssysteme, wie dem Global Positioning System (GPS) oder dem allerdings noch im Probebetrieb befindlichen europäischen Galileo-System, weit verbreitet. Die heutigen Satelliten-Ortungssystemen weisen aber verschiedene Nachteile auf. So kann die Übertragung der GPS-Signale zeitweise vom Betreiber der Satelliten unterbunden werden oder ein Empfang der GPS-Signale für das Fahrzeug temporär nicht möglich sein, beispielsweise, weil sich dieses gerade in einem Parkhaus oder einem Tunnel befindet. Ebenso liegt die Genauigkeit der heutigen Satelliten-Ortungssysteme im Meterbereich und reicht damit zwar für einfache Navigationsanwendungen aus, nicht aber für zukünftige Anwendungen wie das Autonome Fahren, für das eine möglichst genaue Positionsbestimmung im Dezimeter- oder Zentimeterbereich erforderlich ist.

Weiterhin kann für eine relative Positionsbestimmung das Fahrzeugumfeld mit Sensoren des jeweiligen Fahrzeugs erfasst werden. Dieses kann beispielsweise mithilfe mit einer oder mehrerer Kameras des Fahrzeugs, aber auch anderen Sensoren, wie beispielsweise Radar-, Ultraschall- oder Lidarsensoren, erfolgen. Damit können beispielsweise Abstände zu Fahrbahnmarkierungen, Bordsteinen, Leitplanken oder Leitpfosten, aber auch zu anderen stationären Objekten im Fahrzeugumfeld, wie Verkehrszeichen, Ampelanlagen oder Häuserkanten, genau ermittelt werden.

In Kombination der sensorisch gemessenen Abstände mit einer hochauflösenden digitalen Karte, einer sogenannten HD-Karte, kann dann auch eine hochgenaue Lokalisierung erfolgen. Dieser Ansatz verursacht jedoch merkliche Kosten für die in den jeweiligen Fahrzeugen vorgesehenen Komponenten zur Erfassung und Auswertung der Sensordaten. Weiterhin ist die Erstellung und ständige Aktualisierung einer möglichst vollständigen HD-Karte sehr aufwendig. Ebenso resultiert aus der hohen Auflösung bei einer HD Karte, die einen größeren geographischen Bereich abdeckt, eine hohe Datenmenge für die HD Karte und damit ein hoher Speicherbedarf im Fahrzeug bzw. eine hohe Übertragungsbandbreite bei einer Übertragung der Kartendaten zum Fahrzeug, beispielsweise über eine Mobilfunk Verbindung.

Eine weitere Methode zur Schätzung der relativen Position sowie der Orientierung eines Fahrzeugs basiert auf der sogenannten Odometrie. Als Eingangsgrößen dienen hierbei in der Regel Messgrößen aus dem Fahrwerk, des Gierratensensors und der Lenkung. So wird bei radangetriebenen Fahrzeugen die Anzahl der Radumdrehungen zwischen zwei Messzeitpunkten ermittelt und hieraus zusammen mit dem bekannten Radumfang bzw. Raddurchmesser eine Wegdifferenz rechnet: Über den Radlenkwinkel oder den Lenkradwinkel kann die Richtung der Fahrzeugbewegung ermittelt werden.

Die Genauigkeit odometrischer Messverfahren wird durch variierende Fahrzeugparameter und Umgebungseinflüsse beeinflusst und verfälscht, kann aber ausreichen, wenn nur kurze Strecken zurückgelegt werden, wie beispielsweise bei einem Einparkmanöver. Da die inkrementellen Eigenbewegungen des Fahrzeugs aber entlang einer Wegstrecke wiederholt geschätzt und die jeweiligen Schätzwerte aufsummiert werden, addieren sich die Fehler, sodass über längere Wegstrecken merkliche Abweichungen von der tatsächlichen Position auftreten können, die eine hochgenaue Lokalisierung unmöglich machen. Die Odometrie wird daher üblicherweise nicht als alleiniges Verfahren zur Positionsbestimmung eingesetzt. Vielmehr wird sie in Navigationssystemen ergänzend zur GPS-Ortung verwendet, um Bereiche ohne Empfang wie Tunnelstrecken zu überbrücken und die GPS-Ergebnisse zu verfeinern.

Ähnlich wie bei der Odometrie kann auch mit einer inertialen Messeinheit (engl.: Inertial Measurement Unit, IMU) mit mehreren Beschleunigungs- und Drehratensensoren laufend die räumliche Bewegung eines Fahrzeugs bestimmt werden, wobei auch hier eine Drift der verwendeten Sensoren unvermeidlich ist.

Die DE10 2017 121 017 A1 beschreibt ein Verfahren zur Positionsbestimmung eines Kraftfahrzeugs, bei dem sowohl Daten einer Inertialsensoreinrichtung als auch einer Odometriesensoreinrichtung des Kraftfahrzeugs ausgewertet werden. Anhand der Inertialsensordaten werden ein, eine Bewegung des Kraftfahrzeugs beschreibender Bewegungsvektor und anhand der Odometriedaten die Bewegung des Kraftfahrzeugs beschreibende Stützdaten bestimmt. Mittels der Stützdaten wird der Bewegungsvektor korrigiert und in Abhängigkeit von dem korrigierten Bewegungsvektor die aktuelle Position des Kraftfahrzeugs bestimmt.

Eine verbesserte Positionsbestimmung durch eine Kalibrierung von Odometrie und Umgebungssensoren für mobile Roboter, bei der nicht vorgegebene Karten, sondern aus den Sensordaten selbst erstellte Karten verwendet werden (engl.: Simultaneous Localization and Mapping, SLAM) wird in "Graphbasiertes SLAM mit integrierter Kalibrierung für mobile Roboter"; Leonie Sautter; Karlsruher Institut für Technologie, 2015, DOI 10.5445/IR/1000051071 beschrieben. EP 3 578 919 A1 zeigt ein Verfahren nach dem Oberbegriff des Anspruchs 1.

Es ist eine Aufgabe der Erfindung, ein verbessertes Verfahren zur Positionsbestimmung eines Fahrzeugs sowie eine entsprechende Vorrichtung zur Verfügung zu stellen.

Diese Aufgabe wird durch ein Verfahren mit den Merkmalen des Anspruchs 1 sowie durch eine Vorrichtung gemäß Anspruch 9 gelöst. Bevorzugte Ausgestaltungen der Erfindung sind Gegenstand der abhängigen Ansprüche.

Bei einem erfindungsgemäßen Verfahren zur Positionsbestimmung eines Fahrzeugs
- werden für Positionen des Fahrzeugs bei Befahren einer Fahrstrecke hochgenaue Lokalisierungsdaten ermittelt;
- werden odometrische Messgrößen für die fahrzeugeigene Odometrie des Fahrzeugs bei Befahren der Fahrstrecke erfasst;
- werden die ermittelten hochgenauen Lokalisierungsdaten und die erfassten odometrischen Messgrößen gemeinsam ausgewertet; und
- wird die fahrzeugeigene Odometrie auf Basis der Auswertung korrigiert.

Auf diese Weise kann die fahrzeugeigene Odometrie des Fahrzeugs, die beispielsweise aufgrund der jeweiligen Reifengrößen, der je nach Reifendruck und Abnutzungsgrad unterschiedlichen Durchmesser bzw. Radumfänge fahrzeugspezifisch ist, automatisch und individuell für das jeweilige Fahrzeug korrigiert werden. Damit kann die Genauigkeit einer Positionsbestimmung auf Basis der fahrzeugeigenen Odometrie und damit die Verfügbarkeit einer hochgenauen Lokalisierung deutlich erhöht werden. Hierfür sind keine zusätzlichen, Kosten verursachenden Fahrzeugkomponenten erforderlich.

Gemäß einer Ausführungsform der Erfindung wird hierbei mit einem Fehlermodell für die fahrzeugeigene Odometrie eine fahrzeugspezifische Drift berechnet und die fahrzeugeigene Odometrie automatisch durch Kompensierung der berechneten Drift korrigiert.

Hierbei ist es von Vorteil, wenn die fahrzeugeigene Odometrie fortlaufend korrigiert wird, solange hochgenaue Lokalisierungsdaten ermittelt werden können.

Insbesondere wird hierbei die korrigierte fahrzeugeigene Odometrie in Bereichen, in denen hochgenaue Lokalisierungsdaten nicht ermittelt werden können, zur Positionsbestimmung des Fahrzeugs eingesetzt.

Vorzugsweise werden die hochgenauen Lokalisierungsdaten mittels einer digitalen Umgebungskarte und einer sensorischen Detektion von in der digitalen Umgebungskarte verzeichneter Landmarken ermittelt.

Weiterhin werden vorteilhafterweise zusätzlich fahrzeugexterne Einflüsse auf das Fahrzeug bei Befahren der Fahrstrecke ermittelt und bei dem Fehlermodell berücksichtigt, um eine von den fahrzeugexternen Einflüssen unabhängige fahrzeugspezifische Drift zu bestimmen.

Hierbei können die fahrzeugexternen Einflüsse bei Befahren der Fahrstrecke vorliegende Wetter- und/oder Straßenverhältnisse umfassen.

Ebenso können die odometrischen Messgrößen des Fahrzeugs insbesondere die Raddrehung, die Gierrate und/oder den Radlenkwinkel umfassen.

Weiterhin können vorteilhafterweise zusätzlich die Geschwindigkeit und/oder Antriebsleistung des Fahrzeugs erfasst und in dem Fehlermodell berücksichtigt werden.

Eine erfindungsgemäße Vorrichtung zur Positionsbestimmung eines Fahrzeugs umfasst
- eine Einheit zur Erfassung odometrische Messgrößen für die fahrzeugeigene Odometrie des Fahrzeugs bei Befahren der Fahrstrecke;
- eine Auswerte- und Steuereinheit zur Ermittlung hochgenauer Lokalisierungsdaten für Positionen des Fahrzeugs bei Befahren einer Fahrstrecke, zur gemeinsamen Auswertung der ermittelten hochgenauen Lokalisierungsdaten und der erfassten odometrischen Messgrößen und zur Korrektur der fahrzeugeigenen Odometrie auf Basis der Auswertung.

Weitere Merkmale der vorliegenden Erfindung werden aus der nachfolgenden Beschreibung und den Ansprüchen in Verbindung mit den Figuren ersichtlich.
- Fig. 1: zeigt ein Ablaufdiagramm eines erfindungsgemäßen Verfahrens; und
- Fig. 2: zeigt schematisch ein Fahrzeug mit einer erfindungsgemäßen Vorrichtung.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

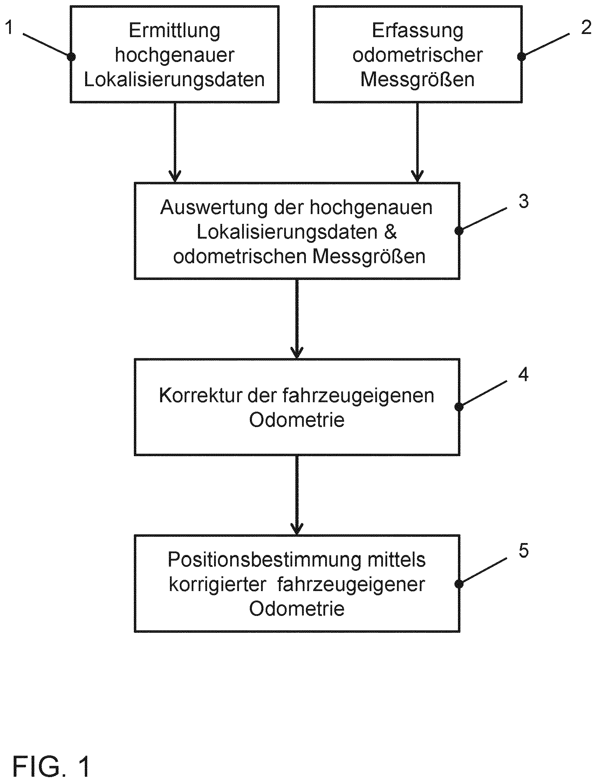

Figur 1 zeigt ein Ablaufdiagramm eines erfindungsgemäßen Verfahrens. In einem ersten Verfahrensschritt 1 werden von einem Fahrzeug bei Befahren einer Fahrstrecke hochgenaue Lokalisierungsdaten ermittelt. Hierfür wird mit Sensoren des jeweiligen Fahrzeugs das Fahrzeugumfeld erfasst. Dieses kann beispielsweise mithilfe mit einer oder mehrerer Kameras des Fahrzeugs, aber auch anderen Sensoren, wie beispielsweise Radar-, Ultraschall- oder Lidarsensoren, erfolgen. Wird mit den Sensoren im Fahrzeugumfeld eine Landmarke erfasst, so werden die Sensorsignale ausgewertet um den Abstand zwischen dem Fahrzeug und der Landmarke zu bestimmen und zu ermitteln, um welche Landmarke es sich handelt. Für die erkannte Landmarke wird dann die hochgenaue Position einer digitalen Umgebungskarte entnommen. Hierfür kann zunächst mit einem satellitengestützten Navigationssystem die GPS-Position des Fahrzeugs grob bestimmt werden, um aus digitalen Karteninformationen einen passenden Abschnitt in Form der digitalen Umgebungskarte zu ermitteln. Hierauf kann aber auch verzichtet werden, wenn die Landmarke eindeutig identifiziert werden kann.

Die digitalen Kartendaten können hierbei bereits im Navigationsgerät des Fahrzeugs vorliegen, oder auch von einer externen zentralen Recheneinheit in Form eines zentralen Backend-Servers bereitgestellt werden, wobei dann eine Übertragung über eine drahtlose Datenfunkverbindung zwischen dem jeweiligen Fahrzeug und dem Backend-Server, beispielsweise mittels einer in dem jeweiligen Fahrzeug vorgesehenen Mobilfunkeinheit, erfolgt.

Weiterhin werden in einem Verfahrensschritt 2 bei Befahren der Fahrstrecke odometrische Messgrößen für die fahrzeugeigene Odometrie des Fahrzeugs erfasst. Verfahrensschritt 1 und Verfahrensschritt 2 werden hierbei typischerweise simultan durchgeführt.

Hierbei werden insbesondere Messgrößen aus dem Fahrwerk, wie die Radumdrehungen, des Gierratensensors und der Lenkung erfasst. Wie bereits erwähnt, kann die Genauigkeit dabei durch variierende Fahrzeugparameter und Umgebungseinflüsse beeinflusst werden. So haben beispielsweise die folgenden Parameter einen Einfluss auf die Genauigkeit einer odometrischen Positionsmessung:
Bei der Radgeometrie können Unrundheiten und Verschleiß zu fehlerhaften Werten für den Raddurchmesser führen. Ebenso können auch das Profil und Material des Reifens, die Veränderung des Durchmessers und der Weichheit des Reifens für unterschiedliche Reifendrücke oder die Reifentemperatur zu unterschiedlichen Werten führen. Weiterhin können unterschiedliche Bodenbeschaffenheiten der befahrenen Straße, wie das jeweilige Material und die jeweilige Unebenheit der Straßenoberfläche, zu unterschiedlichen Werten führen. So kann beispielsweise aufgrund eines unterschiedlichen Reifenschlupfs die Messgenauigkeit beeinträchtigen werden, wobei der Reifenschlupf zusätzlich auch noch von den aktuellen Geschwindigkeits- und Beschleunigungswerten des Fahrzeugs abhängt. Auch kann je nach Fahrzeuggewicht bzw. Beladung des Fahrzeugs eine unterschiedlich starke Belastung und Verformung der Räder und bei einer ungleichen Beladung eine stärkere Belastung und Verformung einzelner Räder erfolgen.

Ebenso können aber auch fahrzeugexterne Einflüsse in Form variierender Wetter- bzw. Witterungsverhältnisse, wie insbesondere unterschiedliche Windstärken und -richtungen oder eine unterschiedliche Haftung der Räder je nachdem ob eine trockene, regennasse oder schneeglatte Straße befahren wird, die Genauigkeit beeinflussen.

Die ermittelten hochgenauen Lokalisierungsdaten und die erfassten odometrischen Messgrößen werden während der Fahrt in einem Verfahrensschritt 3 gemeinsam ausgewertet. Die Auswertung kann hierbei insbesondere mit einem geeigneten Online-Algorithmus im Fahrzeug, aber auch durch einen Backend-Server erfolgen.

In einem Verfahrensschritt 4 erfolgt dann auf Basis der Auswertung eine Korrektur der fahrzeugeigenen Odometrie. Hierfür wird mit einem Fehlermodell basierend auf den ermittelten hochgenauen Lokalisierungsdaten, den erfassten odometrischen Messgrößen für die fahrzeugeigene Odometrie, weiterer Fahrzeugparameter wie der aktuellen Fahrzeuggeschwindigkeit und/oder -beschleunigung, sowie aktueller Fahrtrichtung (Links-/Rechtskurve oder Geradeausfahrt) und ggfs. der aktuellen fahrzeugexterne Einflüsse eine fahrzeugspezifische Drift berechnet.

Die fahrzeugeigene Odometrie wird dann durch Kompensierung der berechneten fahrzeugspezifischen Drift mittels einer oder mehrerer Korrekturwerte automatisch korrigiert. In dem eine solche Korrektur fortlaufend durchgeführt wird, solange hochgenaue Lokalisierungsdaten ermittelt werden können, liegt auch bei Veränderungen der für die Odometrie relevanten Parameter fortwährend eine gegenüber einer unkorrigierten Odometrie deutlich genauere fahrzeugeigene Odometrie vor.

Die Korrekturwerte werden hierbei vorzugsweise auch abgespeichert. Hierbei können insbesondere auch unterschiedliche Korrekturwerte für unterschiedliche Wetter- bzw. Witterungsverhältnisse abgespeichert werden, sodass dann je nach zukünftig vorliegenden Bedingungen eine passende Korrektur in dem Korrekturmodell erfolgen kann.

Sollten dann kurzzeitig keine hochgenauen Lokalisierungsdaten ermittelt werden können, so kann dann die korrigierte fahrzeugeigene Odometrie in einem Verfahrensschritt 5 zur Positionsbestimmung des Fahrzeugs eingesetzt werden.

Anstatt die korrigierte fahrzeugeigene Odometrie für eine verbesserte Positionsbestimmung eines einzelnen Fahrzeugs zu nutzen, kann bei Befahren der Fahrstrecke von einer Vielzahl von Fahrzeugen, eines sogenannten Schwarms von Fahrzeugen, die jeweils durch eine Korrektur eine genauere fahrzeugeigene Odometrie aufweisen, eine hochgenaue Schwarmkarte von einem zentralen Backend-Server aufgebaut und bereitgestellt werden. Diese kann dann beispielsweise die Basis für eine Trajektorienplanung anderer Fahrzeuge oder genauere Positionsangaben von Landmarken in diesem Bereich bilden.

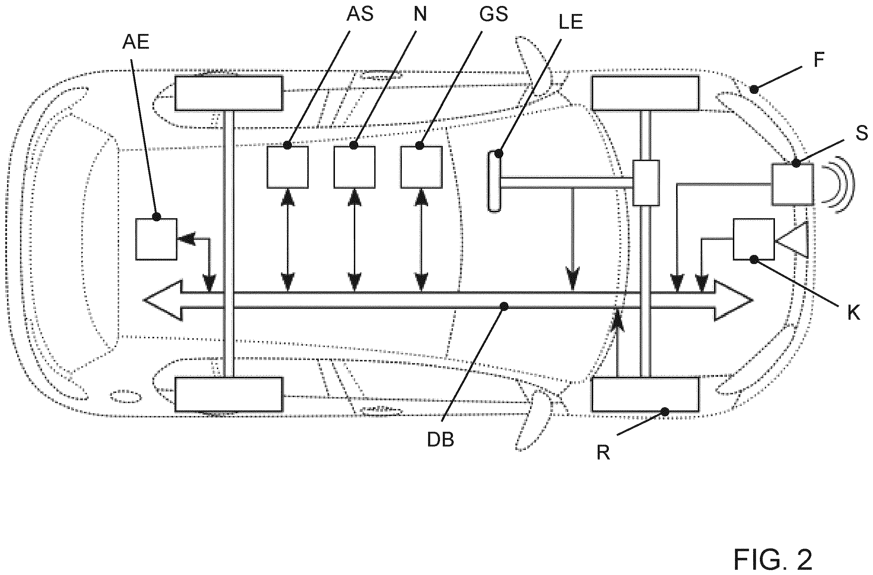

Figur 2 zeigt schematisch eine Draufsicht eines Fahrzeugs F, in dem eine erfindungsgemäße automatische Odometriekorrektur durchgeführt werden kann. Bei dem Fahrzeug F kann es sich insbesondere um einen Personenkraftwagen oder Lastkraftwagen handeln.

Das Fahrzeug weist für die erfindungsgemäße Positionsbestimmung verschiedene Einheiten auf. So ist insbesondere eine Auswerte- und Steuereinheit AS zur Durchführung des erfindungsgemäßen Verfahrens vorgesehen, die beispielsweise als Steuergerät des Fahrzeugs F ausgestaltet sein kann und einen oder mehrere Mikrocontroller oder Mikroprozessoren aufweisen kann.

Eine grobe Lokalisierung des Fahrzeugs kann zunächst mit einer Navigationseinheit N basierend auf empfangenen GPS-Signalen erfolgen. In Verbindung mit hochgenauen Kartendaten und einer sensorgestützten Erfassung von Landmarken im Fahrzeugumfeld kann dann das Fahrzeug sehr präzise lokalisiert werden. Hierfür kann das Fahrzeug eine Fahrzeugkamera K aufweisen, die das Fahrzeugumfeld vor und gegebenenfalls auch neben dem Fahrzeug erfasst. Die von der Fahrzeugkamera erzeugten Bild- bzw. Videodaten können über einen digitalen Datenbus DB im Fahrzeug der Auswerte- und Steuereinheit AS zugeführt werden, welche die Bilddaten auswertet, um mit geeigneten Bildverarbeitungsverfahren die Landmarken im Fahrzeugumfeld zu identifizieren. Weiterhin weist das Fahrzeug mindestens einen weiteren Sensor S auf, mit dem das Fahrzeugumfeld erfasst und der Abstand zwischen dem Fahrzeug und Objekten im Fahrzeugumfeld ermittelt werden kann. Die Sensordaten werden ebenso der Auswerte-und Steuereinheit AS zugeführt.

Als odometrische Messgröße für die fahrzeugeigene Odometrie des Fahrzeugs F kann insbesondere ein Signal über die Drehbewegung der Fahrzeugräder R ermittelt werden, dass die Drehrichtung sowie den Drehwinkel bzw. die Anzahl der Umdrehungen angibt und beispielsweise mittels an den Rädern befindlicher Drehzahlgeber bestimmt werden kann. Zusätzlich kann der aktuelle Lenkwinkel einer Lenkeinheit LE des Fahrzeugs F erfasst werden. Bei der Lenkeinheit LE kann es sich beispielsweise um ein Lenksystem mit einem Lenkgetriebe, zum Beispiel einen Zahnstangen-Lenkgetriebe, oder eine Elektro-hydraulische Servolenkung handeln. Weiterhin kann mit einem Gierratensensor GS ermittelt werden, ob das Fahrzeug sich um die eigene vertikale Achse dreht oder die vom Fahrzeugführer eingeschlagene Lenkrichtung und die tatsächliche Fahrtrichtung voneinander abweichen und gegebenenfalls bei einer Kurvenfahrt einzelne Räder gezielt abgebremst werden, um eine Über- oder Untersteuern zu verhindern.

Die Auswerte-und Steuereinheit AS kann auf Grundlage dieser Parameter und auf Grundlage von weiterer Daten wie der Geometrie der Räder und der Lenkübersetzung der Lenkeinrichtung ermitteln, wie weit und in welche Richtung sich das Fahrzeug entsprechend der odometrischen Positionsbestimmung in Bezug zu einer vorausgehenden Fahrzeugposition bewegt hat. Durch einen fortlaufenden Vergleich der odometrisch bestimmten Position des Fahrzeugs mit der aus den hochgenauen Kartendaten ermittelten Fahrzeugposition können dann durch die Auswerte- und Steuereinheit AS Korrekturwerte für die Odometrie ermittelt und für eine Korrektur herangezogen werden.

Hierbei können der Auswerte- und Steuereinheit AS auch Daten über die aktuelle Geschwindigkeit und Beschleunigung des Fahrzeugs von einem Steuergerät des Fahrzeugs zugeführt werden. Weiterhin können auch Daten über aktuelle Wetter- bzw. Witterungsverhältnisse berücksichtigt werden, die durch geeignete Sensorik im Fahrzeug erfasst werden können oder aber auch dem Fahrzeug extern zugeführt werden können. So kann beispielsweise die aktuelle Außentemperatur mit einem Außentemperaturfühler des Fahrzeugs ermittelt werden, während Daten über die aktuellen Windverhältnisse über eine mobile Datenfunkverbindung empfangen werden.

In dem Fahrzeug F ist weiterhin eine Assistenzeinheit AE vorgesehen, die basierend auf den gewonnenen Positionsdaten Assistenzfunktionen wie eine automatische Längs- und Querführung des Fahrzeugs zur Verfügung stellt und hierfür bei dem Fehlen hochgenauer Lokalisierungsdaten auf die korrigierte fahrzeugeigene Odometrie zurückgreift.

Zusätzlich kann das Fahrzeug weitere, nicht dargestellte Komponenten aufweisen. So kann beispielsweise ein Speicher zur Speicherung der Korrekturwerte für die fahrzeugeigene Odometrie oder die hochgenauen Kartendaten vorgesehen seien. Ebenso kann das Fahrzeug eine Mobilfunkübertragungseinheit aufweisen, mit der Daten mit dem Backendserver oder anderen Fahrzeugen ausgetauscht werden können.

Die Erfindung kann in beliebigen Fahrzeugen angewendet werden, die eine hochgenaue Lokalisierung für integrierte Assistenzsysteme oder das automatische Fahren benötigen, ist aber nicht darauf beschränkt, sondern kann beispielsweise auch bei fahrbaren Robotern eingesetzt werden.

### Bezugszeichenliste

- 1 - 5: Verfahrensschritte
- F: Fahrzeug
- R: Reifen
- LE: Lenkeinheit
- S: Umfeldsensor
- K: Kamera
- GS: Giersensor
- AS: Auswerte- und Steuereinheit
- N: Navigationseinheit
- AE: Assistenzeinheit
- DB: Datenbus

## Patentansprüche

1. Verfahren zur Positionsbestimmung eines Fahrzeugs, wobei
- für Positionen des Fahrzeugs (F) bei Befahren einer Fahrstrecke hochgenaue Lokalisierungsdaten ermittelt (1) werden, wobei die hochgenauen Lokalisierungsdaten mittels einer digitalen Umgebungskarte und einer sensorischen Detektion von in der digitalen Umgebungskarte verzeichneter Landmarken ermittelt (1) werden;
- odometrische Messgrößen für die fahrzeugeigene Odometrie des Fahrzeugs (F) bei Befahren der Fahrstrecke erfasst (2) werden;
- die ermittelten hochgenauen Lokalisierungsdaten und die erfassten odometrischen Messgrößen gemeinsam ausgewertet (3) werden;
- **dadurch gekennzeichnet, dass** die fahrzeugeigene Odometrie auf Basis der Auswertung fortlaufend korrigiert (4) wird, solange hochgenaue Lokalisierungsdaten ermittelt werden können; und
- die korrigierte fahrzeugeigene Odometrie in Bereichen, in denen hochgenaue Lokalisierungsdaten nicht ermittelt werden können, zur Positionsbestimmung des Fahrzeugs eingesetzt (5) wird.

2. Verfahren nach Anspruch 1, wobei mit einem Fehlermodell für die fahrzeugeigene Odometrie eine fahrzeugspezifische Drift berechnet wird und die fahrzeugeigene Odometrie automatisch durch Kompensierung der berechneten Drift korrigiert wird.

3. Verfahren nach einem der Ansprüche 1 oder 2, wobei zusätzlich fahrzeugexterne Einflüsse auf das Fahrzeug bei Befahren der Fahrstrecke ermittelt werden und bei dem Fehlermodell berücksichtigt werden, um eine von den fahrzeugexternen Einflüssen unabhängige fahrzeugspezifische Drift zu bestimmen.

4. Verfahren nach Anspruch 3, wobei die fahrzeugexternen Einflüsse bei Befahren der Fahrstrecke vorliegende Wetter- und/oder Straßenverhältnisse umfassen.

5. Verfahren nach Anspruch 4, wobei die Wetter- und/oder Straßenverhältnisse durch das Fahrzeug sensorisch erfasst werden.

6. Verfahren nach Anspruch 4, wobei Daten über die Wetter- und/oder Straßenverhältnisse von dem Fahrzeug über eine mobile Datenfunkverbindung empfangen werden.

7. Verfahren nach einem der vorhergehenden Ansprüche, wobei die odometrischen Messgrößen des Fahrzeugs insbesondere die Raddrehung, die Gierrate und/oder den Radlenkwinkel umfassen.

8. Verfahren nach einem der Ansprüche 2 bis 7, wobei zusätzlich die Geschwindigkeit und/oder Antriebsleistung des Fahrzeugs erfasst und in dem Fehlermodell berücksichtigt wird.

9. Vorrichtung zur Positionsbestimmung eines Fahrzeugs, mit
- einer Einheit zur Erfassung odometrische Messgrößen für die fahrzeugeigene Odometrie des Fahrzeugs (F) bei Befahren der Fahrstrecke;
- einer Auswerte- und Steuereinheit (AS) zur Ermittlung hochgenauer Lokalisierungsdaten für Positionen des Fahrzeugs (F) bei Befahren einer Fahrstrecke, wobei die hochgenauen Lokalisierungsdaten mittels einer digitalen Umgebungskarte und einer sensorischen Detektion von in der digitalen Umgebungskarte verzeichneter Landmarken ermittelt (1) werden, zur gemeinsamen Auswertung der ermittelten hochgenauen Lokalisierungsdaten und der erfassten odometrischen Messgrößen, zur fortlaufenden Korrektur der fahrzeugeigenen Odometrie auf Basis der Auswertung, solange hochgenaue Lokalisierungsdaten ermittelt werden können, und zur Positionsbestimmung des Fahrzeugs mittels der korrigierten fahrzeugeigenen Odometrie in Bereichen, in denen hochgenaue Lokalisierungsdaten nicht ermittelt werden können.

10. Vorrichtung nach Anspruch 9, wobei diese weiterhin eine Assistenzeinheit (AE) aufweist, die basierend auf den gewonnenen Positionsdaten eine automatische Längs- und Querführung des Fahrzeugs (F) zur Verfügung stellt und hierfür bei dem Fehlen hochgenauer Lokalisierungsdaten auf die korrigierte fahrzeugeigene Odometrie zurückgreift.

11. Vorrichtung nach Anspruch 9 oder 10, wobei diese weiterhin eine Sensorik zur Erfassung der Wetter- und/oder Straßenverhältnisse und/oder eine Mobildatenfunkeinheit zum Empfang von Daten über die Wetter- und/oder Straßenverhältnisse aufweist.

## Claims

1. Method for determining the position of a vehicle, wherein
- high-accuracy localization data are ascertained (1) for positions of the vehicle (F) while travelling on a route, the high-accuracy localization data being ascertained (1) by means of a digital map of the surroundings and sensor detection of landmarks entered in the digital map of the surroundings;
- odometrical measured variables for the on-vehicle odometry of the vehicle (F) are measured (2) while travelling on the route;
- the ascertained high-accuracy localization data and the measured odometrical measured variables are collectively evaluated (3);
- **characterized in that** the on-vehicle odometry is continually corrected (4) on the basis of the evaluation while high-accuracy localization data can be ascertained; and
- the corrected on-vehicle odometry is used to determine the position of the vehicle (5) in regions in which high-accuracy localization data cannot be ascertained.

2. Method according to Claim 1, wherein an error model for the on-vehicle odometry is used to calculate a vehicle-specific drift, and the on-vehicle odometry is corrected automatically by compensating for the calculated drift.

3. Method according to either of Claims 1 and 2, wherein vehicle-external influences on the vehicle are ascertained in addition while travelling on the route and are taken into account in the error model in order to determine a vehicle-specific drift that is independent of the vehicle-external influences.

4. Method according to Claim 3, wherein the vehicle-external influences include weather and/or road conditions prevailing while travelling on the route.

5. Method according to Claim 4, wherein the weather and/or road conditions are sensed by sensor by the vehicle.

6. Method according to Claim 4, wherein data about the weather and/or road conditions are received by the vehicle via a mobile data radio connection.

7. Method according to one of the preceding claims, wherein the odometrical measured variables of the vehicle include in particular the wheel rotation, the yaw rate and/or the wheel steering angle.

8. Method according to one of Claims 2 to 7, wherein the speed and/or drive power of the vehicle is sensed in addition and is taken into account in the error model.

9. Apparatus for determining the position of a vehicle, having
- a unit for measuring odometrical measured variables for the on-vehicle odometry of the vehicle (F) while travelling on the route;
- an evaluation and control unit (AS) for ascertaining high-accuracy localization data for positions of the vehicle (F) while travelling on a route, the high-accuracy localization data being ascertained (1) by means of a digital map of the surroundings and sensor detection of landmarks entered in the digital map of the surroundings, for collectively evaluating the ascertained high-accuracy localization data and the measured odometrical measured variables, for continually correcting the on-vehicle odometry on the basis of the evaluation while high-accuracy localization data can be ascertained, and for determining the position of the vehicle by means of the corrected non-vehicle odometry in regions in which high-accuracy localization data cannot be ascertained.

10. Apparatus according to Claim 9, wherein said apparatus moreover comprises an assistance unit (AE) that takes the position data obtained as a basis for providing automatic longitudinal and lateral guidance of the vehicle (F) and accomplishes this by resorting to the corrected on-vehicle odometry when high-accuracy localization data are absent.

11. Apparatus according to Claim 9 or 10, wherein said apparatus moreover comprises a sensor system for sensing the weather and/or road conditions and/or a mobile data radio unit for receiving data about the weather and/or road conditions.

## Revendications

1. Procédé de détermination de la position d'un véhicule,
- des données de localisation très précises étant déterminées (1) pour des positions du véhicule (F) lorsqu'il parcourt un itinéraire, les données de localisation très précises étant déterminées (1) au moyen d'une carte d'environnement numérique et d'une détection de points de repère, répertoriés dans la carte d'environnement numérique, par un ensemble de capteurs ;
- des grandeurs odométriques relatives à l'odométrie propre du véhicule (F) étant acquises (2) lorsqu'il parcourt l'itinéraire ;
- les données de localisation très précises déterminées et les grandeurs de mesure odométriques acquises étant évaluées conjointement (3) ;
- **caractérisé en ce que** l'odométrie propre du véhicule est corrigée en continu (4) sur la base de l'évaluation tant que des données de localisation très précises peuvent être déterminées ; et
- l'odométrie propre du véhicule, une fois corrigée, est utilisée (5) pour déterminer la position du véhicule dans des zones dans lesquelles des données de localisation très précises ne peuvent pas être déterminées.

2. Procédé selon la revendication 1, une dérive spécifique au véhicule étant calculée à l'aide d'un modèle d'erreur relatif à l'odométrie propre au véhicule et l'odométrie propre au véhicule étant automatiquement corrigée par compensation de la dérive calculée.

3. Procédé selon l'une des revendications 1 ou 2, des influences extérieures subies par le véhicule étant en outre déterminées lorsqu'il parcourt l'itinéraire et étant prises en compte dans le modèle d'erreur afin de déterminer une dérive propre au véhicule indépendante des influences extérieures subies par le véhicule.

4. Procédé selon la revendication 3, les influences extérieures subies par le véhicule comprenant les conditions météorologiques et/ou routières existantes lorsqu'il parcourt l'itinéraire.

5. Procédé selon la revendication 4, les conditions météorologiques et/ou routières étant acquises par le véhicule au moyen d'un ensemble de capteurs.

6. Procédé selon la revendication 4, des données relatives aux conditions météorologiques et/ou routières étant reçues par le véhicule par le biais d'une liaison de données radio mobile.

7. Procédé selon l'une des revendications précédentes, les grandeurs de mesure odométriques du véhicule comprenant notamment la rotation des roues, le taux de lacet et/ou l'angle de braquage des roues.

8. Procédé selon l'une des revendications 2 à 7, la vitesse et/ou la puissance d'entraînement du véhicule étant également acquises et prises en compte dans le modèle d'erreur.

9. Dispositif de détermination de la position d'un véhicule, ledit dispositif comprenant
- une unité de détection de grandeurs de mesure odométriques relatives à l'odométrie propre du véhicule (F) lorsqu'il parcourt l'itinéraire ;
- une unité d'évaluation et de commande (AS) destinée à déterminer des données de localisation très précises relatives à des positions du véhicule (F) lorsqu'il parcourt un itinéraire, les données de localisation très précises étant déterminées (1) au moyen d'une carte d'environnement numérique et d'une détection de points de repère, répertoriés dans la carte d'environnement numérique, au moyen d'un ensemble de capteurs pour évaluer conjointement les données de localisation très précises déterminées et les grandeurs de mesure odométriques acquises afin de corriger en continu l'odométrie propre au véhicule sur la base de l'évaluation, tant que des données de localisation très précises peuvent être déterminées, et afin de déterminer la position du véhicule à l'aide de l'odométrie propre au véhicule, une fois corrigée, dans des zones dans lesquelles des données de localisation très précises ne peuvent pas être déterminées.

10. Dispositif selon la revendication 9, ledit dispositif comportant en outre une unité d'assistance (AE) qui, sur la base des données de position obtenues, assure un guidage longitudinal et transversal automatique du véhicule (F) et utilise l'odométrie propre au véhicule, une fois corrigée, en cas d'absence de données de localisation très précises.

11. Dispositif selon la revendication 9 ou 10, ledit dispositif comprenant également un ensemble de capteurs destiné à acquérir les conditions météorologiques et/ou routières et/ou une unité radio de données mobile pour recevoir des données relatives aux conditions météorologiques et/ou routières.
